# EUROPEAN PATENT SPECIFICATION

(11) **EP 3 295 270 B1**
(45) Date of publication and mention of the grant of the patent: **05.12.2018**
(21) Application number: 16724346.8
(22) Date of filing: 13.05.2016
(51) Int. Cl.: G05D 16/06, G05D 16/10

(54) **WATER PRESSURE REDUCER**
WASSERDRUCKMINDERER
RÉDUCTEUR DE PRESSION D'EAU

(30) Priority: 13.05.2015 US 201514711682
(43) Date of publication of application: 21.03.2018
(73) Proprietor: Itron France, 92130 Issy-les-Moulineaux (FR)
(72) Inventor: LAURENS, Anthony, 92130 Issy-les-Moulinaux (FR); AUJAS, Maxime, 92130 Issy-les-Moulinaux (FR); DEPEYRE, Christophe, 92130 Issy-les-Moulinaux (FR)
(74) Representative: Morrall, Jonathan Ian McLachlan
(86) International application number: PCT/EP2016/060845
(87) International publication number: WO 2016/180966

(56) References cited:
- WO-A1-2011/057165
- DE-A1- 1 550 150
- FR-A- 495 895
- GB-A- 732 400
- JP-A- 2012 208 802

## Description

### BACKGROUND

Many residential and commercial buildings receive water from city, county, municipality, or other incoming water pipes, also known as water lines. The water pressure in these water lines can be substantial when that pressure is uncontrolled or when the water lines are designed to provide water to many residential and commercial buildings at the same time. Additionally, water pressure from incoming water lines may "spike" or increase sharply at a given time depending on end user consumption and water input. However, most residential and commercial buildings do not require the magnitude of water pressure that is provided in incoming water lines, and in fact, such high water pressure may harm some residential and commercial piping or the appliances such as washers, refrigerators, and shower heads in those buildings.

To prevent residential and commercial piping and appliances from damage caused by high water pressure or water pressure spikes, pressure reducers have been employed. Water pressure reduction technology has consisted of either a piston-type system or a membrane-type system, both of which rely on tension or traction forces to operate, causing stress on various components of the systems and leading to decreased service life. Also, in both the piston-type and membrane-type applications, a proportional relationship exists between upstream water pressure and downstream water pressure such that as upstream water pressure increases, downstream water pressure also increases. Thus, at high enough upstream water pressures, the downstream water pressure, while less than the upstream pressure, may still damage downstream pipes and appliances.

JP 2012 208802 a pressure reducing valve with a closing mechanism. A primary side pressure chamber 13 of a high-pressure side and a secondary side pressure chamber 14 of a pressure receiving device side are communicated by a communicating hole 17. A diaphragm 19 for receiving pressure of the secondary side pressure chamber 14 is disposed and a valve body 18 is coupled to the diaphragm 19. The diaphragm 19 is biased toward a valve opening direction by a valve opening spring 20.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items.
Fig. 1 illustrates a perspective view of a water pressure reducer as installed in a water line system in a residential application with various appliances;
Fig. 2 illustrates a side, cross-sectional view of a water pressure reducer with right-to-left water flow and pipe connections;
Fig. 3 illustrates a side, cross-sectional view of a water pressure reducer with a left-to-right water flow and when low upstream pressure is applied;
Fig. 4 illustrates a side, cross-sectional view of a water pressure reducer with a left-to-right water flow and when high upstream pressure is applied; and
Fig. 5 is an exemplary flowchart illustrating an example by which a water pressure reducer may operate.

### DETAILED DESCRIPTION

### Overview

This disclosure describes example water pressure reducers that rely on compression forces, instead of tension or traction forces, to operate. This disclosure also describes example water pressure reducers wherein an inverse relationship exists between upstream and downstream water pressure such that an increase in upstream water pressure results in a decrease in downstream water pressure. Additionally, the disclosure describes a method of operating water pressure reducers such as those described herein.

In one example, a pressure reducer may be configured as a two-chamber design. A housing may define a first chamber releaseably coupled to a second chamber and a membrane situated between the first and second chambers. The first and second chambers may also be defined by a cover and a base, respectively. A spring in the first chamber can apply force to the membrane, biasing or flexing the membrane at least partially into the second chamber. A plunger can be included in the second chamber and can be coupled to the membrane such that when the spring in the first chamber compresses and decompresses, the plunger moves within the second chamber in first and second directions, respectively. When the plunger moves in the first direction responsive to higher water pressure, a driver coupled to the plunger can be biased toward a valve seat within the second chamber, restricting or prohibiting water flow to downstream pipes and appliances. When the plunger moves in the second direction responsive to lower water pressure, the driver can be biased away from the valve seat, promoting increased water flow to downstream pipes and appliances. The membrane can have a flexing range that can allow for continuous expansion and contraction of the spring, and thus smooth and continuous movement of the plunger and driver in the first and second directions.

In another example, a water pressure reducer may be configured to include an inlet opening in the base. The base can also define an inlet port near the inlet opening that can be coupled to the valve seat. The valve seat can further define an outlet port through which the plunger can extend. In this example, the upstream water pressure can apply compression force to the membrane, and does not apply tension or traction forces to any other components of the pressure reducer.

In another example, a method of operating a water pressure reducer such as that described herein can include receiving liquid within the base portion of the housing, wherein the liquid has an inlet pressure. Then, the membrane may move responsive to a balance between an upward force by the water pressure within the base portion and a downward force by the spring in the cover. If the water pressure is greater than the spring's force, the spring will compress and bias the membrane, the plunger, and the driver in the first direction to thereby decrease the distance between the driver and the valve seat. Disposition of the membrane in the first direction can cause an outlet pressure that is less than the inlet pressure. If the water pressure is less than the spring's force, the spring can extend and bias the membrane, the plunger, and the driver in the second direction that increases the distance between the driver and the valve seat. Disposition of the membrane in the second direction can cause an outlet pressure that is lower than or equal to the inlet pressure.

Water pressure reducers according to this disclosure may be designed for use with a variety of water lines, such as, for example, potable water and sewage lines in residential or commercial applications.

### Example Water Pressure Reducer

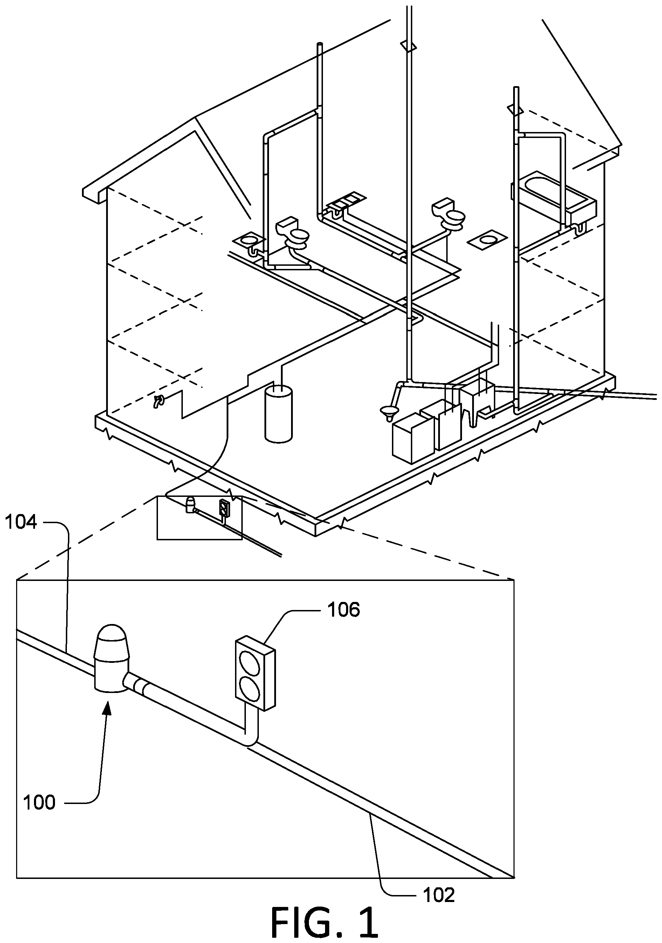

FIG. 1 illustrates an example of a water pressure reducer 100 as installed in a water line. The water pressure reducer 100 can be installed at any point between the upstream water line 102, serving a plurality of customers, and the downstream water line 104, serving a single customer. In the example of FIG. 1, the water pressure reducer 100 is installed in the water line after the water usage meter 106 for the building that the upstream water line 102 is serving. The water pressure reducer 100 can reduce water pressure in the downstream water line 104 such that appliances hooked up to the downstream water line 104 receive water pressure below a threshold pressure to prevent damage to those appliances. An appliance, as described herein, can be any water outlet in the downstream water line 104, such as bathtubs, toilets, sinks, refrigerators, washers, hot water heaters, etc.

In some embodiments, multiple water pressure reducers 100 can be installed in the same water line and in the same downstream water system. For example, one water pressure reducer 100 can be installed between the upstream water line 102 serving multiple customers and the downstream water line 104 serving a single customer or located at a customer's site. A second water pressure reducer 100 can be installed within the downstream water line 104 between the downstream piping and an appliance, for example. Use of multiple water pressure reducers 100 allows differing levels of protection to be given to various appliances within a water system. The water pressure reducers 100 disclosed herein can also be detached or otherwise removed from a water line and inserted into a new or different water line. As such, a water pressure reducer 100 can be used in one or in multiple water lines.

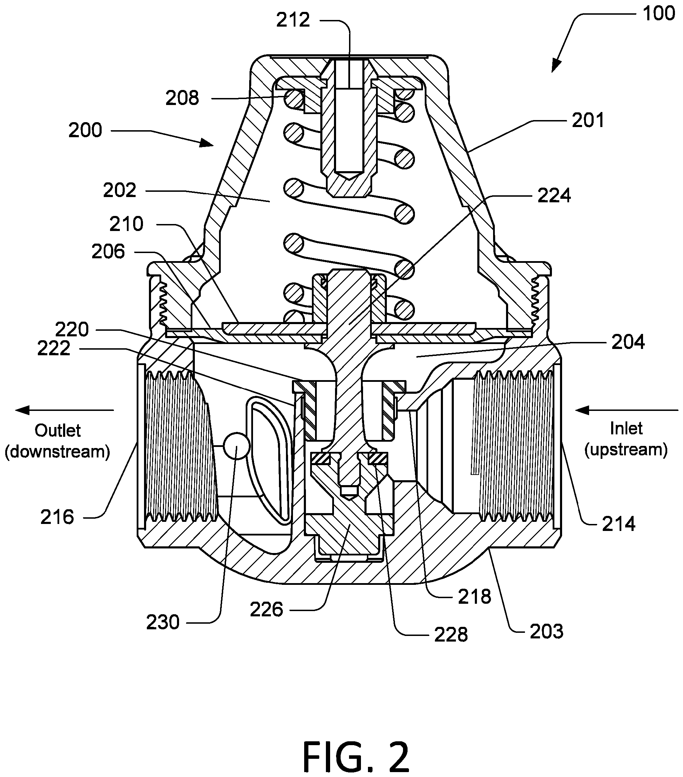

FIGS. 2-4 illustrate an example embodiment of a water pressure reducer 100. As shown in FIG. 2, the water pressure reducer 100 can include a housing 200 defining an at least partially hollow interior defining a first chamber 202 and a second chamber 204. The housing 200 may include a cover 201, which may define the first chamber 202, and a base 203, which may define the second chamber 204. In the example shown, the cover 201 and base 203 may be connected by a threaded connection, although others means of connection may be used, such as alternative fasteners, welding, or a unified construction. The cover 201 defining the first chamber 202 and the base 203 defining the second chamber 204 can be releaseably coupled together. A membrane 206 may be situated between the cover 201 and the base 203. The first chamber 202 defined by the cover 201 can include a spring 208. In one embodiment, the spring 208 can be in contact with the membrane 206 and the interior of the first chamber 202 defined by the cover 201. The spring 208 may bias the membrane 206 toward, or somewhat into, the second chamber 204 defined by the base 203. In another embodiment, the membrane 206 may have a footing 210 situated between the membrane 206 and the spring 208. In another embodiment, the cover 201 may also include a pressure adjustment component 212 situated at least partially between the interior of the first chamber 202 and the spring 208. The pressure adjustment component 212 may control a degree to which the spring is compressed or relaxed, to thereby provide control over a pressure of water discharged from the water pressure reducer 100. Accordingly, with regulation provided by the pressure adjustment component 212, the spring 208 can be configured to exert an adjustable force on the membrane 206 in the direction of the second chamber 204.

Still referring to FIG. 2, the base 203 may define an inlet opening 214 and an outlet opening 216. The inlet opening 214 and outlet opening 216 can be configured to be on opposite sides of the base 203, as shown in FIG. 2, or the inlet opening 214 and the outlet opening 216 can be configured at any point around the base 203. The inlet opening 214 can include an inlet port 218 situated within the second chamber 204 defined by the base 203. In one embodiment, the inlet port 218 can be situated at the junction where an upstream water pipe and the base 203 meet when the upstream water pipe and the base 203 are coupled.

The inlet port 218 can be substantially circular and can have the same diameter as the upstream water pipe or a smaller or larger diameter. In another embodiment, the inlet port 218 can have a diameter smaller than the diameter of the upstream water pipe to allow initial water pressure reduction before liquid reaches the membrane 206. A valve seat 220 can be at least partially coupled to the inlet port 218. In the example shown, the valve seat 220 is situated substantially perpendicular to the inlet port 218 such that only a portion of the valve seat 220 is coupled to the inlet port 218.

Still referring to FIG. 2, the valve seat 220 can be substantially circular and can have the same or differing diameters from the inlet port 218 and the upstream water pipe. The valve seat 220 can also extend at least partially into the inlet port 218 in some embodiments. The valve seat 220 can be at least partially coupled to an outlet port 222. The outlet port 222 can be substantially circular and can have a diameter that will allow the valve seat 220 to be received within the outlet port 222. As depicted in FIG. 2, the inlet port 218 and the outlet port 222 can be adjacent to each other or can share a side wall, and both the inlet port 218 and the outlet port 222 can be coupled to the valve seat 220. In some embodiments, the outlet opening 216 can be separate from the outlet port 222, and can be situated away from the valve seat 220 and the inlet port 218.

Still referring to FIG. 2, a plunger 224 can be releaseably coupled to the membrane 206 and extend through the outlet port 222 and the valve seat 220. When the inlet port 218, valve seat 220, and outlet port 222 are configured as shown in FIG. 2, a shaft is formed through which the plunger 224 can pass through. In some embodiments, the plunger 224 can extend through the membrane 206 and at least partially into the first chamber 202 and be coupled to the footing 210. In other embodiments, not shown, the plunger 224 may not extend into the first chamber 202. The plunger 224 may be releaseably coupled to the membrane 206 or the footing 210 through a variety of means, including but not limited to adhesive, rivets, male and female threads or joints, or "click-in" tongue and groves.

A driver 226 may be releaseably coupled to the plunger 224 and be positioned substantially opposite the membrane 206. The driver 226 can have a substantially flat upper portion and can be configured to engage the valve seat 220 such that, when engaged, the driver 226 comes into contact with the bottom portion of the valve seat 220 and creates at least a partial seal, hindering water flow through the valve seat 220. The driver 226, as described herein, may not independently bias the membrane 206 or the plunger 224. In some embodiments, the driver 226 can be a portion of the plunger 224 and be defined as the portion of the plunger 224 that has a larger radius than the portion of the plunger 224 that extends through the valve seat 220.

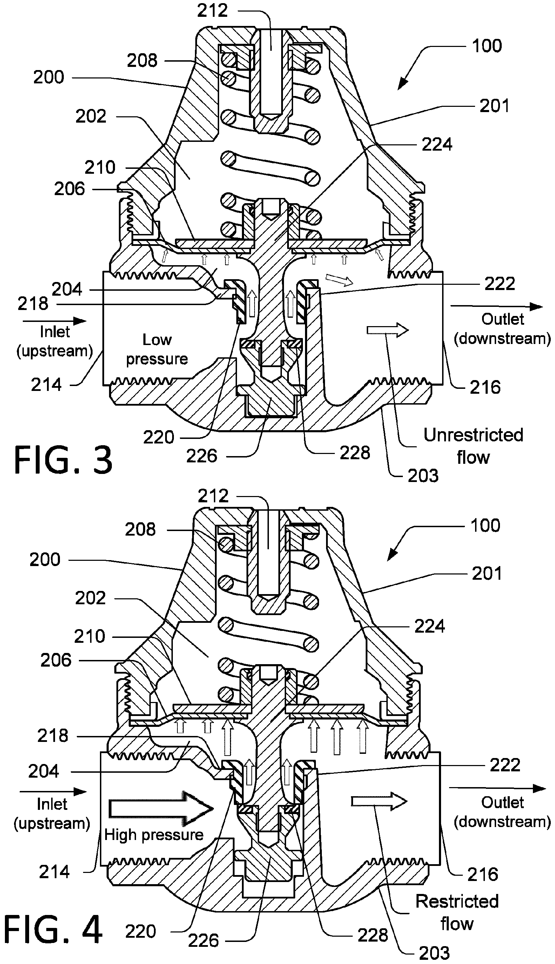

Still referring to FIG. 2, the driver 226 may include a gasket 228 on the upper portion configured to contact the valve seat 220 when the valve seat 220 and the driver 226 are engaged. The gasket 228 can promote the releaseable sealing of the driver 226 to the valve seat 220 and prevent or inhibit water flow from the inlet opening 214. The driver 226 can also be configured to include at least partially beveled sides. The partial beveling can allow water from the inlet opening 214 to surround the driver 226 and exert pressure toward the plunger 224. This force around the driver 226 can assist in flexing or biasing the membrane 206 to increase or decrease water flow to the outlet opening 216. As the driver 226 moves with the plunger 224 to compress the spring 208 responsive to increased upstream water pressure, a space under the driver 226 may be created (as shown in FIG. 4). This space can fill with water from the inlet opening 214, allowing additional water pressure to act against the spring 208.

The second chamber 204 may also include an air valve drain plug 230, which can be configured to allow air within the second chamber 204 to be drained from the second chamber 204. In one embodiment, the air valve drain plug 230 can be used after installation of the water pressure reducer 100 and if air builds up in the water pressure reducer 100 over time.

Still referring to FIG. 2, after the water pressure reducer 100 is installed in the water line, the pressure adjustment component 212 can be manipulated to increase or reduce the compression of the spring 208. For example, the pressure adjustment component 212 can be pressed or screwed further into the first chamber 202, which can cause the spring 208 to compress. This compression can cause additional force to be applied to the membrane 206, which in turn can require greater water pressure from the upstream water line to counteract the spring's 208 force and cause the plunger 224 and driver 226 to move. Likewise, pulling or unscrewing the pressure adjustment component 212 further out of the first chamber 202 can allow the spring 208 to expand, putting less pressure on the membrane 206 and requiring less water pressure from the upstream water line to counteract the spring's 208 force. Accordingly, by decompressing the spring with the pressure adjustment component 212, the water pressure reducer is responsive to lesser water pressures, and by compressing the spring, the water pressure reducer is responsive to greater water pressures.

FIG. 3 shows an example operation of the water pressure reducer 100, wherein incoming water pressure is less than typical. In this condition, water can flow from the inlet opening 214, past the inlet port 218, valve seat 220, and outlet port 222, and out of the outlet opening 216. When water pressure from the upstream water line is low, the force of the spring 208 can flex or bias the membrane 206 downward and into the second chamber 204. In this low water pressure example, the driver 226 is not in contact with the valve seat 220, allowing water to flow from the inlet opening 214, through the valve seat 220 and outlet port 222, and out the outlet opening 216.

FIG. 4 shows an example operation of the water pressure reducer 100, wherein incoming water pressure is greater. In this condition, water pressure from the upstream water line compresses the spring 208. The water pressure within the second chamber 204 defined by the base 203 flexes or biases the membrane 206 toward the first chamber 202 defined by the cover 201, thereby drawing the plunger 224 and driver 226 upwards. When the force of water pressure within the second chamber 204 is greater than the force of the spring 208, the plunger 224 and driver 226 can be said to move in a first direction (i.e., upwardly, as shown). This upward motion moves the driver 226 toward the valve seat 220, thereby restricting water flow through the pressure reducer 100. If the pressure of the incoming water is great enough, the driver 226 will seat against the valve seat 220, effectively stopping water flow and protecting fixtures and appliances associated with the downstream piping from over-pressure damage. Thus, when incoming water pressure is sufficiently high, the plunger 224 and driver 226 can be biased in the first direction such that the driver 226 can move toward and may engage the valve seat 220, as shown in FIG. 4. When the driver 226 engages the valve seat 220, or when the driver 226 moves in the first direction, water pressure within the second chamber 204 can be reduced as water is output through the outlet opening 216 defined in the base 203. When the incoming pressure reduces, the force on the membrane 206 will be less, and the spring 208 will move the plunger 224 in a second direction (e.g., downwardly, as shown) thereby increasing water flow through the valve seat 220.

While FIGS. 3 and 4 show the plunger 224 and driver 226 in a fully open and fully closed position, respectively, the membrane 206 can force the plunger 224 and driver 226 into any position between fully open and fully closed. In one embodiment, when the membrane 206 is being biased in the first direction, the membrane 206 is biasing the driver 226 toward the fully closed position. When the membrane 206 is being biased in the second direction, the membrane 206 is biasing the driver 226 toward the fully open position. The position of the plunger 224 and driver 226, and direction of their movement, can be dependent on how much force is being applied to the membrane 206 by water pressure within the second chamber 204 relative to the force being applied by the spring 208. As such, the distance between the driver 226 and the valve seat 220 can smoothly and continuously change as water pressure within the second chamber 204 changes.

The components described above in the present disclosure and as shown in FIGS. 1-4 can be separate components coupled together, or can be produced as one component or as combined components. For example, the base 203 of the housing 200 defining the second chamber 204, inlet opening 214, outlet opening 216, inlet port 218, valve seat 220, and outlet port 222 can be one component. The cover 201 can also be one component. Also by way of example, the housing 200 can be one component defining the first chamber 202 and the second chamber 204. When the various components described in the present disclosure are separate components, some or all of the components can be releaseably coupled to the other components.

The water pressure reducers 100 described herein can be of varying sizes and scales. For example, a water pressure reducer 100 designed for residential application may be of a smaller size and scale than a water pressure reducer 100 designed for commercial applications.

The presently disclosed water pressure reducers 100 can be made of one or more of various materials, including but not limited to metal and plastic. When made of metal, the water pressure reducers 100 can be made of any metal with suitable strength and malleability, such as brass or bronze, to create the devices described herein. The various components of the water pressure reducers 100 disclosed herein may have additional grooves, slots, indentations, and other components to facilitate the function of the device as described herein.

The various components of the water pressure reducers 100 disclosed herein can be made using techniques known to those having skill in the art of metal working, including, for example, by milling or hot pressing. The membrane 206 can be made of a polymer having a crystallinity low enough to allow the membrane 206 to flex between the first chamber 202 and the second chamber 204. The polymer making up the membrane 206 can also have a tensile strength at least sufficient to withstand the force of compression from the spring 208 and the force of water pressure within the second chamber 204. Once the various components of the water pressure reducer 100 are made, the plunger 224 can be coupled to the membrane 206 as described above. The plunger 224, including the driver 226, can be situated through the outlet port 222 and valve seat 220. The spring 208 can be placed within the first chamber 202, and situated between the membrane 206 (or footing 210, if used) and the pressure adjustment component 212. The pressure adjustment component 212 can be adjusted to achieve a desired downstream water pressure. The water pressure reducer 100 can then be installed in a water line (as shown in FIG. 1, for example).

### Exemplary Method of Implementation

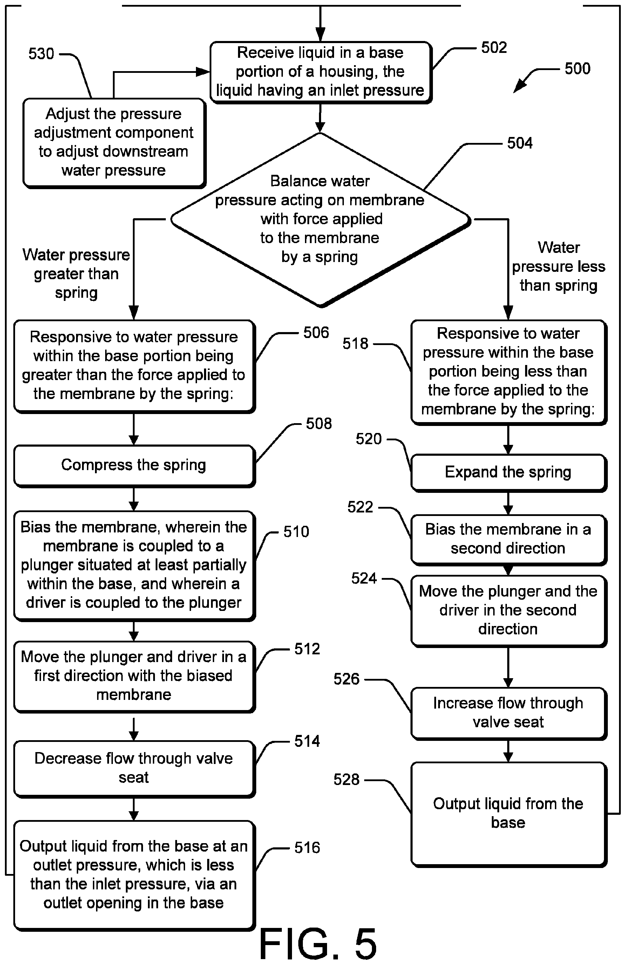

Turning now to FIG. 5, there is illustrated an exemplary method 500 of operating a water pressure reducer 100 such as that disclosed herein.

Before operation, in one embodiment, the water pressure reducer 100 can be installed between the water usage meter 106 and the point where the water line enters the downstream building, as shown in FIG. 1. The water pressure reducer 100 can be installed by threading or clamping the upstream water line 102 into the inlet opening 214 of the second chamber 204 of the base 203, and by threading or clamping the downstream water line 104 into the outlet opening 216 of the second chamber 204 of the base 203. Various sealants, clamps, or components can be used to ensure the upstream and downstream water pipes remain coupled to the water pressure reducer 100.

Before upstream water is allowed to flow into the second chamber 204 of the water pressure reducer 100, the force from the spring 208 can flex or bias the membrane 206 in the direction of the second chamber 204, which can push the plunger 224 away from the first chamber 202 and force the driver 226 away from the valve seat 220. Without water in the second chamber 204, the inlet port 218 can be fully open. The pressure adjustment component 212 may be used to adjust spring tension.

At block 502, the water pressure reducer 100 can receive liquid in the base portion 203 of the housing 200, the liquid having an inlet pressure. In one embodiment, the inlet pressure can be the water pressure within upstream water lines that are connected to the water pressure reducer 100 at the inlet opening 214.

In block 504, liquid from the inlet opening 214 can enter the second chamber 204 defined by the base 203, and fill the second chamber 204. Once the liquid fills the second chamber 204, water pressure can begin to build and exert a force on the membrane 206 counter to the force of the spring 208 within the first chamber 202. Step 504 entails balancing the water pressure within the base 203 acting on the membrane 206 with the force of the spring 208.

In block 506, the membrane 206 responds to water pressure within the base 203 being greater than the force applied to the membrane 206 by the spring 208. Accordingly, the membrane 206 moves toward the spring 208.

In block 508, responsive to the high water pressure against the membrane 206, the spring 208 will compress. The magnitude of compression of the spring 208 depends on the water pressure acting on the membrane 206. By way of example, if the force of the water pressure is only slightly greater than the force of the spring 208, then the spring 208 will compress only slightly, until the force of the spring 208 equals the force of the water against the membrane 206. As the spring 208 compresses, the force of the spring 208 acting on the membrane 206 increases. This is due to the natural increase in force caused by a more coiled spring.

In block 510, the compressed spring 208 can bias the membrane 206, wherein the membrane 206 can be coupled to the plunger 224, which is situated at least partially within the base 203. As described above, the driver 226 can be coupled to the plunger 224.

In block 512, the biased membrane 206 can move the plunger 224 and the driver 226 in a first direction with the biased membrane. In the embodiment shown in FIG. 4, the first direction is toward the cover 201 and away from the base 203 of the housing 200.

At block 514, as the plunger 224 and the driver 226 move in the first direction, the distance between the driver 226 and the valve seat 220 within the base 203 can decrease, such that flow through the valve seat 220 decreases. As shown in FIG. 4, for example, a high upstream water pressure can cause the spring 208 to compress and bias the membrane 206 in the first direction to such an extent that the distance between the driver 226 and the valve seat 220 has decreased such that the driver 226 and the valve seat 220 are engaged. Thus, FIG. 4 shows a fully closed valve seat 220. It should be understood that FIG. 4 represents only one state or configuration of the present disclosure, and the distance between the driver 226 and the valve seat 220 can be any distance between fully engaged (as depicted in FIG. 4), fully open (as depicted in FIG. 3), or any distance between the two (such as, for example, in FIG. 2).

In block 516, liquid from the base 203 can be outputted at an outlet pressure, which is less than the inlet pressure, via the outlet opening 216 in the base 203. As liquid discharges from the base 203, its pressure is low enough to not harm the downstream water lines or appliances connected thereto.

As water within the downstream water lines is used or otherwise removed from the downstream water lines, the water pressure within the downstream water lines can decrease, which can cause a decrease in water pressure within the base 203 of the water pressure reducer 100. When water pressure within the base 203 lessens, step 504 described above can be reevaluated, and the balance between water pressure within the base 203 acting on the membrane 206 and the force applied to the membrane 206 by the spring 208 may shift in favor or the membrane 206 moving to relax the spring.

In block 518, the membrane 206 responds to water pressure within the base 203 being less than the force applied to the membrane 206 by the spring.

In block 520, the spring 208 can expand. The spring 208 relaxes or extends until the force it applies to the membrane 206 equals the force of the water pressure against the membrane. By way of example, if the force of the water pressure is only slightly less than the force of the spring 208, then the spring 208 will expand only slightly. As the spring 208 expands, the force of the spring 208 acting on the membrane 206 decreases. This is due to the natural decrease in force caused by a less coiled spring.

In block 522, the expansion of the spring 208 and reduction in water pressure can allow movement of the membrane 206 in a second direction.

In block 524, the biased membrane 206 can move the plunger 224 and the driver 226 in the second direction with the biased membrane. In the embodiment shown in FIG. 3, the second direction is toward the base 203 and away from the cover 201 of the housing 200.

As the plunger 224 and the driver 226 move in the second direction, the distance between the driver 226 and the valve seat 220 within the base 203 can be increased in step 526, increasing flow through the valve seat 220. As shown in FIG. 3, a low upstream water pressure has caused the spring 208 to expand and bias the membrane 206 in the second direction to such an extent that the distance between the driver 226 and the valve seat 220 has increased from that shown in FIG. 4. The embodiment shown in FIG. 3 represents a fully open inlet port 218. It should be understood that FIG. 3 represents only one embodiment of the present disclosure, and the distance between the driver 226 and the valve seat 220 can be any distance between fully engaged (as depicted in FIG. 4), fully open (as depicted in FIG. 3), or any distance between the two (such as, for example, in FIG. 2).

In block 528, liquid from the base 203 can be outputted via the outlet opening 216 in the base 203. As liquid is outputted from the base 203, it can flow to the downstream water lines with a water pressure low enough to not harm the downstream water lines or appliances connected thereto.

As water pressure within the downstream water lines builds, such as when no appliances in the downstream water line are being used, step 504 described above can again be taken, and a balancing of the water pressure within the base 203 acting on the membrane 206 with the force applied to the membrane 206 by the spring 208 is performed. This process of determining the difference in force between the spring 208 and the water pressure within the base 203 and taking the steps of 506-516 or 518-528 depending on the result of the determination, can be performed continuously and smoothly by the water pressure reducer 100 described herein.

In block 530, the pressure adjustment component 212 can be adjusted at any time, including but not limited to before receiving liquid in the base 203 of the housing 200.

When in use, the water pressure from the upstream water line can be constantly changing. The method of operating water pressure reducers 100 disclosed herein can be repeated or altered continuously such that the distance between the driver 226 and the valve seat 220 can be continuously changing or otherwise be dynamic. Accordingly, a cross-section of a flow passage through the water pressure reducer 100 may be dynamically changed, allowing the reducer to provide greater cross-sectional area when incoming pressure is lower and to provide lesser cross-sectional area when incoming pressure is higher. Also, the membrane 206 can have a flex range wherein the membrane 206 can flex to allow the driver 226 to be a maximum distance from the valve seat 220, creating a fully open position, and wherein the membrane 206 can flex to allow the driver 226 to be engaged with the valve seat 220, creating a fully closed position. The membrane 206 can flex anywhere between and including the fully closed and fully open positions, depending on upstream water pressure.
limited to the specific features or acts described. Rather, the specific features and acts are merely illustrative some embodiments that fall within the scope of the claims of the application.

## Claims

1. A water pressure reducer (100), comprising:
a housing (200) defining an at least partially hollow interior, wherein the housing comprises a base (203) and a cover (201) having a threaded connection;
a membrane (206), which divides the interior of the housing into a first chamber (202) within the cover and a second chamber (204) within the base and which is movable responsive to changes in water pressure against the membrane wherein the second chamber comprises an air valve drain plug (230) configured to allow air within the second chamber to be drained from the second chamber;
an inlet opening (214) and an outlet opening (216) defined in the second chamber of the housing;
a valve seat (220) situated within the second chamber;
a plunger (224) situated at least partially within the second chamber, coupled to the membrane, and extending at least partially through the valve seat;
a driver (226) coupled to the plunger and configured to releasably engage with the valve seat; and
a spring (208) situated within the first chamber, wherein the spring is in compression and biases the plunger such that the driver is not engaged with the valve seat.

2. The water pressure reducer (100) of claim 1, wherein the membrane (206) is responsive to an increase in water pressure within the second chamber (204) resulting in compression of the spring (208), biasing the plunger (224) in a first direction, wherein distance between the valve seat (220) and the driver (226) decreases.

3. The water pressure reducer (100) of claim 1 or 2, wherein the membrane (206) is responsive to a decrease in water pressure within the second chamber (204) resulting in expansion of the spring (208), biasing the plunger (224) in a second direction, wherein the distance between the valve seat (220) and the driver (226) increases.

4. The water pressure reducer (100) of any preceding claim, wherein the membrane (206) comprises a flexible material which is movable in a smooth, continuous motion responsive to the changes in water pressure against the membrane.

5. The water pressure reducer (100) of claim 4, wherein the flexible material comprises a polymer which has a tensile strength at least sufficient to withstand a force of compression from the spring (208) and a force of water pressure within the second chamber (204).

6. The water pressure reducer (100) of any preceding claim, wherein the plunger (224) extends through the membrane (206) and partially into the first chamber (202).

7. The water pressure reducer (100) of any preceding claim, wherein the driver (226) further comprises a gasket (228) configured to make contact with the valve seat (220).

8. The water pressure reducer (100) of any preceding claim, wherein the housing (200) is at least partially made of brass.

9. The water pressure reducer (100) of any preceding claim, wherein the first chamber (202) further comprises a pressure adjustment component (212) coupled to the spring (208) to adjust a force with which the spring biases the plunger (224).

10. A method (500) of operating a pressure reducer (100), the method comprising: receiving (502) liquid in a base portion (203) of a housing (200), the liquid having an inlet pressure;
balancing (504) water pressure within the base portion acting on a membrane (206) with a force applied to the membrane by a spring (208) within a cover portion (201) of the housing;
responsive to water pressure within the base portion being greater than the force applied to the membrane by the spring:
compressing (508) the spring;
biasing (510) the membrane, wherein the membrane is coupled to a plunger (224) situated at least partially within the base, and wherein a driver (226) is coupled to the plunger;
moving (512) the plunger and the driver in a first direction;
decreasing (514) flow through a valve seat (220);
outputting (516) liquid from the base at an outlet pressure, which is less than the inlet pressure, via an outlet opening (216) in the base and;
draining air trapped in the base of the housing through an air valve drain plug (230).

11. The method (500) of claim 10, further comprising:
responsive to water pressure within the base portion (203) being less than the force applied to the membrane (206) by the spring (208):
expanding (520) the spring;
biasing (522) the membrane in a second direction;
moving (524) the plunger (224) and the driver (226) in a second direction;
increasing (526) flow through the valve seat (220); and
outputting (528) liquid from the base.

12. The method (500) of claim 10 or 11, additionally comprising adjusting (530) the force of the spring (208) with a pressure adjustment component (212).

13. The method (500) of any of claims 10 to 12, wherein the membrane (206) and the spring (208) move between positions that allow greater or lesser restriction on fluid flow.

14. The method (500) of any of claims 10 to 13, wherein moving (512) the plunger (224) and the driver (226) in a first direction comprises moving the driver to engage the valve seat (220).

15. The method (500) of any of claims 10 to 14, further comprising decreasing fluid flow through the pressure reducer (100) when the spring (208) is compressed and increasing fluid flow through the pressure reducer when the spring is expanded.

## Patentansprüche

1. Wasserdruckminderer (100), der Folgendes umfasst:
ein Gehäuse (200), das ein mindestens teilweise hohles Inneres definiert, wobei das Gehäuse eine Basis (203) und eine Abdeckung (201) mit einer Gewindeverbindung umfasst;
eine Membran (206), die das Innere des Gehäuses in eine erste Kammer (202) innerhalb der Abdeckung und eine zweite Kammer (204) innerhalb der Basis teilt und die in Reaktion auf Veränderungen im Wasserdruck gegen die Membran bewegbar ist, wobei die zweite Kammer einen Luftventilauslassstopfen (230) umfasst, der dazu ausgelegt ist, Luft innerhalb der zweiten Kammer zu gestatten, aus der zweiten Kammer abgelassen zu werden;
eine Einlassöffnung (214) und eine Auslassöffnung (216), definiert in der zweiten Kammer des Gehäuses;
einen in der zweiten Kammer befindlichen Ventilsitz (220);
einen mindestens teilweise in der zweiten Kammer befindlichen Kolben (224), der an die Membran gekoppelt ist und sich mindestens teilweise durch den Ventilsitz erstreckt;
einen Mitnehmer (226), der mit dem Kolben gekoppelt und dazu ausgelegt ist, lösbar in Eingriff mit dem Ventilsitz zu gelangen; und
eine Feder (208), die sich in der ersten Kammer befindet, wobei die Feder zusammengedrückt ist und den Kolben vorspannt, sodass sich der Mitnehmer nicht im Eingriff mit dem Ventilsitz befindet.

2. Wasserdruckminderer (100) nach Anspruch 1, wobei die Membran (206) auf einen Anstieg im Wasserdruck innerhalb der zweiten Kammer (204) reagiert, resultierend in einem Zusammendrücken der Feder (208), wodurch der Kolben (224) in einer ersten Richtung vorgespannt wird, wobei sich der Abstand zwischen dem Ventilsitz (220) und dem Mitnehmer (226) verringert.

3. Wasserdruckminderer (100) nach Anspruch 1 oder 2, wobei die Membran (206) auf eine Verringerung im Wasserdruck innerhalb der zweiten Kammer (204) reagiert, resultierend in einem Ausdehnen der Feder (208), wodurch der Kolben (224) in einer zweiten Richtung vorgespannt wird, wobei sich der Abstand zwischen dem Ventilsitz (220) und dem Mitnehmer (226) vergrößert.

4. Wasserdruckminderer (100) nach einem der vorangehenden Ansprüche, wobei die Membran (206) ein flexibles Material umfasst, das in einer gleichmäßigen, kontinuierlichen Bewegung in Reaktion auf die Veränderungen im Wasserdruck gegen die Membran bewegbar ist.

5. Wasserdruckminderer (100) nach Anspruch 4, wobei das flexible Material ein Polymer umfasst, das eine Zugfestigkeit hat, die mindestens ausreicht, um einer Kraft des Zusammendrückens von der Feder (208) und einer Kraft von Wasserdruck innerhalb der zweiten Kammer (204) zu widerstehen.

6. Wasserdruckminderer (100) nach einem der vorangehenden Ansprüche, wobei sich der Mitnehmer (224) durch die Membran (206) und teilweise in die erste Kammer (202) erstreckt.

7. Wasserdruckminderer (100) nach einem der vorangehenden Ansprüche, wobei der Mitnehmer (226) ferner eine Dichtung (228) umfasst, die dazu ausgelegt ist, Kontakt mit dem Ventilsitz (220) herzustellen.

8. Wasserdruckminderer (100) nach einem der vorangehenden Ansprüche, wobei das Gehäuse (200) mindestens teilweise aus Messing gefertigt ist.

9. Wasserdruckminderer (100) nach einem der vorangehenden Ansprüche, wobei die erste Kammer (202) ferner eine Druckeinstellkomponente (212) umfasst, die mit der Feder (208) gekoppelt ist, um eine Kraft einzustellen, mit der die Feder den Mitnehmer (224) vorspannt.

10. Verfahren (500) zum Betreiben eines Druckminderers (100), wobei das Verfahren Folgendes umfasst:
Empfangen (502) von Flüssigkeit in einem Basisabschnitt (203) eines Gehäuses (200), wobei die Flüssigkeit einen Einlassdruck hat;
Ausgleichen (504) von Wasserdruck innerhalb eines Basisabschnitts, der auf eine Membran (206) wirkt, wobei auf die Membran durch eine Feder (208) innerhalb eines Abdeckungsabschnitts (201) des Gehäuses eine Kraft ausgeübt wird;
Reagieren auf Wasserdruck innerhalb des Basisabschnitts, der größer als die Kraft ist, die von der Feder auf die Membran ausgeübt wird:
Zusammendrücken (508) der Feder;
Vorspannen (510) der Membran, wobei die Membran mit einem Kolben (224) gekoppelt ist, der sich mindestens teilweise innerhalb der Basis befindet, und wobei ein Mitnehmer (226) mit dem Kolben gekoppelt ist;
Bewegen (512) des Kolbens und des Mitnehmers in eine erste Richtung;
Verringern (514) von Durchfluss durch einen Ventilsitz (220);
Ausgeben (516) von Flüssigkeit von der Basis mit einem Auslassdruck, der niedriger als der Einlassdruck ist, über eine Auslassöffnung (216) in der Basis, und
Ablassen von in der Basis des Gehäuses gefangener Luft durch einen Luftventilablassstopfen (230).

11. Verfahren (500) nach Anspruch 10, das ferner Folgendes umfasst:
Reagieren auf Wasserdruck innerhalb des Basisabschnitts (203), der geringer als die Kraft ist, die von der Feder (208) auf die Membran (206) ausgeübt wird:
Ausdehnen (520) der Feder;
Vorspannen (522) der Membran in einer zweiten Richtung;
Bewegen (524) des Kolbens (224) und des Mitnehmers (226) in eine zweite Richtung;
Erhöhen (526) von Durchfluss durch den Ventilsitz (220); und
Ausgeben (528) von Flüssigkeit von der Basis.

12. Verfahren (500) nach Anspruch 10 oder 11, das darüber hinaus ein Einstellen (530) der Kraft der Feder (208) mit einer Druckeinstellkomponente (212) umfasst.

13. Verfahren (500) nach einem der Ansprüche 10 bis 12, wobei sich die Membran (206) und die Feder (208) zwischen Positionen bewegen, die eine größere oder geringere Beschränkung von Fluidfluss gestatten.

14. Verfahren (500) nach einem der Ansprüche 10 bis 13, wobei ein Bewegen (512) des Kolbens (224) und des Mitnehmers (226) in einer ersten Richtung ein Bewegen des Mitnehmers umfasst, um in den Ventilsitz (220) einzugreifen.

15. Verfahren (500) nach einem der Ansprüche 10 bis 14, das ferner ein Verringern des Fluidflusses durch den Druckminderer (100) umfasst, wenn die Feder (208) zusammengedrückt ist, und ein Erhöhen des Fluidflusses durch den Druckminderer, wenn die Feder ausgedehnt ist.

## Revendications

1. Réducteur de pression d'eau (100), comprenant :
un boîtier (200) définissant un intérieur au moins partiellement creux, le boîtier comprenant une base (203) et un couvercle (201) ayant un raccord fileté ;
une membrane (206), qui divise l'intérieur du boîtier en une première chambre (202) à l'intérieur du couvercle et une seconde chambre (204) à l'intérieur de la base et qui est mobile en réponse aux changements de pression d'eau contre la membrane, la seconde chambre comprenant un bouchon de vidange (230) de purgeur d'air conçu pour permettre à l'air de la seconde chambre d'être purgé de la seconde chambre ;
une ouverture d'entrée (214) et une ouverture de sortie (216) définies dans la seconde chambre du boîtier ;
un siège de soupape (220) situé dans la seconde chambre ;
un plongeur (224) situé au moins partiellement à l'intérieur de la seconde chambre, accouplé à la membrane, et s'étendant au moins partiellement à travers le siège de soupape ;
un dispositif d'entraînement (226) accouplé au plongeur et conçu pour venir en prise de façon libérable avec le siège de soupape ; et
un ressort (208) situé à l'intérieur de la première chambre, le ressort étant en compression et sollicitant le plongeur de sorte que le dispositif d'entraînement ne soit pas en prise avec le siège de soupape.

2. Réducteur de pression d'eau (100) selon la revendication 1, la membrane (206) réagissant à une augmentation de la pression d'eau à l'intérieur de la seconde chambre (204) provoquant une compression du ressort (208), sollicitant le plongeur (224) dans une première direction, la distance entre le siège de soupape (220) et le dispositif d'entraînement (226) diminuant.

3. Réducteur de pression d'eau (100) selon la revendication 1 ou 2, la membrane (206) réagissant à une diminution de la pression d'eau à l'intérieur de la seconde chambre (204), entraînant une expansion du ressort (208), sollicitant le plongeur (224) dans une seconde direction, la distance entre le siège de soupape (220) et le dispositif d'entraînement (226) augmentant.

4. Réducteur de pression d'eau (100) selon l'une quelconque des revendications précédentes, la membrane (206) comprenant un matériau flexible qui est mobile dans un mouvement continu et sans à-coup en réponse aux changements de pression d'eau contre la membrane.

5. Réducteur de pression d'eau (100) selon la revendication 4, le matériau flexible comprenant un polymère qui a une résistance à la traction au moins suffisante pour résister à une force de compression du ressort (208) et une force de pression d'eau dans la seconde chambre (204).

6. Réducteur de pression d'eau (100) selon l'une quelconque des revendications précédentes, le plongeur (224) s'étendant à travers la membrane (206) et partiellement dans la première chambre (202).

7. Réducteur de pression d'eau (100) selon l'une quelconque des revendications précédentes, le dispositif d'entraînement (226) comprenant en outre un joint (228) conçu pour venir en contact avec le siège de soupape (220).

8. Réducteur de pression d'eau (100) selon l'une quelconque des revendications précédentes, le boîtier (200) étant au moins partiellement en laiton.

9. Réducteur de pression d'eau (100) selon l'une quelconque des revendications précédentes, la première chambre (202) comprenant en outre un élément de réglage de pression (212) accouplé au ressort (208) pour régler une force avec laquelle le ressort sollicite le plongeur (224).

10. Procédé (500) de fonctionnement d'un réducteur de pression (100), le procédé comprenant les étapes consistant à :
recevoir (502) du liquide dans une partie de base (203) d'un boîtier (200), le liquide ayant une pression d'entrée ;
équilibrer (504) la pression d'eau à l'intérieur de la partie de base agissant sur une membrane (206) avec une force appliquée à la membrane par un ressort (208) dans une partie de couvercle (201) du boîtier ;
en réponse au fait que la pression d'eau à l'intérieur de la partie de base est supérieure à la force appliquée à la membrane par le ressort :
comprimer (508) le ressort ;
solliciter (510) la membrane, la membrane étant accouplée à un plongeur (224) situé au moins partiellement à l'intérieur de la base, et un dispositif d'entraînement (226) étant accouplé au plongeur ;
déplacer (512) le plongeur et le dispositif d'entraînement dans une première direction ;
diminuer (514) le flux à travers un siège de soupape (220) ;
sortir (516) le liquide de la base à une pression de sortie, qui est inférieure à la pression d'entrée, par l'intermédiaire d'une ouverture de sortie (216) dans la base et ;
purger l'air emprisonné dans la base du boîtier par l'intermédiaire d'un bouchon de vidange (230) de purgeur d'air.

11. Procédé (500) selon la revendication 10, comprenant en outre les étapes consistant à :
en réponse au fait que la pression d'eau à l'intérieur de la partie de base (203) est inférieure à la force appliquée à la membrane (206) par le ressort (208) :
étendre (520) le ressort ;
solliciter (522) la membrane dans une seconde direction ;
déplacer (524) le plongeur (224) et le dispositif d'entraînement (226) dans une seconde direction ;
augmenter (526) le flux à travers le siège de soupape (220) ; et
sortir (528) le liquide de la base.

12. Procédé (500) selon la revendication 10 ou 11, comprenant en outre l'étape consistant à régler (530) la force du ressort (208) avec un élément de réglage de pression (212).

13. Procédé (500) selon l'une quelconque des revendications 10 à 12, la membrane (206) et le ressort (208) se déplaçant entre des positions qui permettent une restriction plus ou moins grande du flux de fluide.

14. Procédé (500) selon l'une quelconque des revendications 10 à 13, le déplacement (512) du plongeur (224) et du dispositif d'entraînement (226) dans une première direction comprenant l'étape consistant à déplacer le dispositif d'entraînement pour venir en prise avec le siège de soupape (220).

15. Procédé (500) selon l'une quelconque des revendications 10 à 14, comprenant en outre les étapes consistant à diminuer le flux de fluide à travers le réducteur de pression (100) lorsque le ressort (208) est comprimé et à augmenter le flux de fluide à travers le réducteur de pression lorsque le ressort est étendu.
